# FASCICULE DE BREVET EUROPEEN

(11) **EP 4 337 533 B1**
(45) Date de publication et mention de la délivrance du brevet: **05.03.2025**
(21) Numéro de dépôt: 22728139.1
(22) Date de dépôt: 06.05.2022
(51) Int. Cl.: B64D 11/06, B60N 2/00, E04B 1/82

(54) **UNITE DE SIEGE MUNIE D'UN PANNEAU ATTENUATEUR DE BRUIT**
SITZEINHEIT MIT EINER GERÄUSCHDÄMPFUNGSPLATTE
SEAT UNIT EQUIPPED WITH A NOISE ATTENUATION PANEL

(30) Priorité: 12.05.2021 FR 2105016
(43) Date de publication de la demande: 20.03.2024
(73) Titulaire: Safran Seats, 78370 Plaisir (FR)
(72) Inventeur: COTTA, Gérald, 77550 MOISSY-CRAMAYEL (FR); GLAIN, Arthur K., 77550 MOISSY-CRAMAYEL (FR)
(74) Mandataire: Marconnet, Sébastien
(86) Numéro de dépôt international: PCT/EP2022/062251
(87) Numéro de publication internationale: WO 2022/238248

(56) Documents cités:
- WO-A1-2019/216927
- WO-A1-2019/239204
- WO-A2-03/004355
- US-A- 3 858 676

## Description

La présente invention porte sur une unité de siège munie d'un panneau atténuateur de bruit. L'invention trouve une application particulièrement avantageuse, mais non exclusive, avec les unités de sièges de type "classe affaires" et "première classe" d'une cabine d'avion.

De façon connue en soi, une telle unité de siège comporte un siège associé à une console latérale munie de rangements et à une coque s'étendant au moins en partie autour du siège de manière à délimiter un espace semi-clos autour du passager. Une telle configuration permet de garantir l'intimité du passager assis sur le siège.

Le siège offre au passager différentes positions de confort, d'une position "assise" jusqu'à une position "allongée", dans laquelle le siège définit un plan de couchage sensiblement horizontal pour que le passager puisse s'allonger. Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions. Le siège est généralement constitué notamment du dossier et d'une assise et est susceptible de comporter un repose-jambes et/ou un repose-pieds, pouvant être fixes ou liés à une cinématique du siège.

Le bruit susceptible de gêner le repos des passagers est une préoccupation environnementale importante à prendre en considération lors du développement d'une unité de siège. Il existe donc le besoin de réduire la perception du bruit à l'intérieur d'une cabine d'avion afin d'optimiser le confort acoustique des passagers sans toutefois réduire leur espace de vie.

Le document WO2019/239204 décrit un écran de confidentialité pour un siège de passager comprenant un cadre définissant un périmètre de l'écran de confidentialité disposé autour du siège et une couche insonorisante positionnée à l'intérieur du cadre et entourée par une coque textile pour conférer une intimité physique, visuelle et sonore à un passager.

L'invention vise à combler efficacement ce besoin en proposant une unité de siège comportant:
- un siège,
- au moins un élément d'environnement associé au siège, et
- un panneau atténuateur de bruit fixé sur une face de l'élément d'environnement,
- ledit panneau atténuateur de bruit comportant:
   - une coiffe d'habillage, et
   - une plaque de support comportant au moins une portion perméable au son munie d'au moins un trou traversant, ladite plaque de support étant disposée de telle façon qu'il existe un espace vide entre ladite portion perméable au son et la face de l'élément d'environnement du siège.

L'invention permet ainsi, grâce à la réalisation des trous traversants dans la plaque de support, de proposer un piège sonore compact intégré à l'élément d'environnement du siège. En effet, les trous traversants permettent le passage des ondes sonores à l'intérieur de l'espace vide séparant la plaque de support par rapport à l'élément d'environnement du siège, de sorte qu'après de multiples réflexions à l'intérieur de cet espace, l'intensité de bruit perçue par le passager au niveau du siège est grandement réduite.

Selon une réalisation de l'invention, le panneau atténuateur de bruit comporte en outre une couche de matériau absorbeur de son disposée entre la coiffe d'habillage et la plaque de support.

Selon une réalisation de l'invention, la couche de matériau absorbeur de son est réalisée dans un matériau choisi notamment parmi: un matériau fibreux, un matériau non tissé, un matériau à base de ouate, ou un matériau à base de mousse.

Selon une réalisation de l'invention, le panneau atténuateur de bruit est configuré de façon à présenter un pic d'absorption sonore pour des fréquences comprises entre 20Hz et 20kHz, de préférence entre 600Hz et 4KHz.

Selon une réalisation de l'invention, une hauteur de l'espace vide entre la plaque de support et la face de l'élément d'environnement est comprise entre 1mm et 15mm et vaut de préférence 3mm.

Selon une réalisation de l'invention, la plaque de support est réalisée dans un matériau plastique thermoformé ou est constituée par une pièce plastique injectée.

Selon une réalisation de l'invention, la plaque de support comporte au moins un trou traversant ayant un diamètre compris entre 1mm et 15mm. Si la plaque de support présente plusieurs trous, ces trous peuvent être tous de mêmes diamètres ou de diamètres différents. De même, la forme de ces trous ne se limite pas à des formes circulaires mais à toutes formes géométriques possibles.

Selon une réalisation de l'invention, la plaque de support comporte des pieds en appui contre la face de l'élément d'environnement du siège.

Selon une réalisation de l'invention, la plaque de support comporte des moyens de fixation amovibles pour fixer le panneau atténuateur de bruit sur la face de l'élément d'environnement du siège.

Selon une réalisation de l'invention, la coiffe d'habillage est réalisée dans un matériau perméable au son.

Selon une réalisation de l'invention, l'élément d'environnement associé au siège est choisi parmi: une coque d'intimité s'étendant au moins en partie autour du siège, une console, ou un ottoman.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'une unité de siège selon l'invention comportant des panneaux atténuateurs de bruit;
[Fig. 2] La figure 2 est une vue en coupe d'un panneau atténuateur de bruit monté sur un élément d'environnement du siège;
[Fig. 3] La figure 3 est une vue en perspective éclatée des différents composants d'un panneau atténuateur de bruit selon la présente invention;
[Fig. 4] La figure 4 est une vue en coupe partielle illustrant le phénomène d'absorption sonore par le panneau atténuateur de bruit selon l'invention;
[Fig. 5a] [Fig. 5b] [Fig. 5c] [Fig. 5d] Les figures 5a, 5b, 5c, et 5d illustrent différents types de distributions des perforations réalisées dans la plaque de support d'un panneau atténuateur de bruit selon l'invention.

Il est à noter que les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Par ailleurs, dans la suite de la description, les termes relatifs du type "avant", "arrière", "horizontal", "vertical" sont entendus par référence au sens commun que leur donnerait un passager assis sur un siège associé à l'unité de siège selon l'invention.

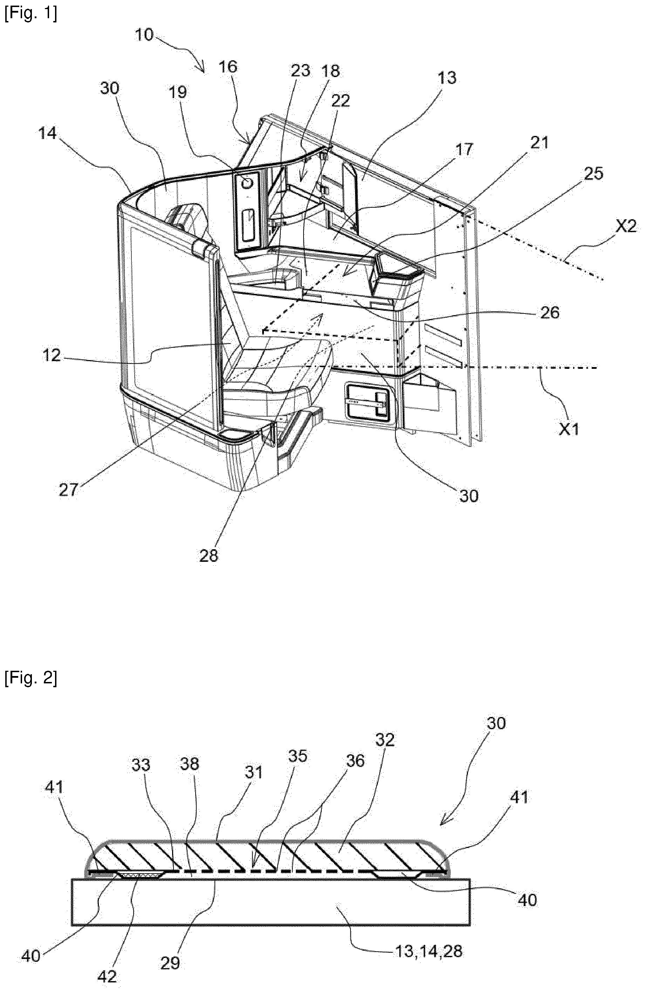

La figure 1 montre une unité de siège 10 comportant un siège 12 associé à une console latérale 13 s'étendant suivant un côté du siège 12.

En outre, une coque 14, dite coque d'intimité, s'étend au moins en partie autour du siège 12 de manière à délimiter un espace semi-clos autour du passager. La coque 14 d'intimité est réalisée par exemple dans un matériau composite. Une telle configuration permet de garantir l'intimité du passager assis sur le siège 12. Un écran vidéo 16 d'un système multimédia ou IFE (pour "Inflight Entertainment System" en anglais) pourra être implanté sur une partie arrière de la coque 14 d'intimité de façon à être utilisable par un passager arrière.

La console 13 pourra comporter une face supérieure 17 formant une table sur laquelle le passager peut poser des objets ainsi qu'un espace de stockage 18 comportant un ou plusieurs éléments parmi une pochette littérature, un porte-bouteille, ou un minibar. Le choix des rangements est configurable en fonction du souhait de la compagnie aérienne. La console 13 pourra également comporter une liseuse 19 destinée à orienter un éclairage en direction du siège 12.

Une cavité 21 est située sous la paroi supérieure. La cavité 21 est ouverte latéralement en direction du siège 12. En outre, une face horizontale 22 de la console 13 a notamment une fonction d'accoudoir. A cet effet, la face horizontale 22 pourra présenter localement une forme de manchette incurvée 23 épousant la forme d'une partie du bras du passager.

La console 13 comporte également une unité de contrôle 25 du siège 12 et de ses composants annexes (dite "PCU" pour "Passenger Control Unit" en anglais). L'unité de contrôle 25 permet notamment au passager de commander la sélection d'une position du siège 12 ainsi que les composants annexes, tels qu'un système vidéo, un dispositif de chauffage, un système d'ambiance lumineuse, ou tout autre composant annexe pouvant être intégré au siège 12.

L'unité de siège 10 pourra également comporter classiquement une tablette repas 26 mobile entre une position stockée (correspondant à celle représentée sur la figure 1) dans laquelle la tablette repas 26 se trouve à l'intérieur d'un logement ménagé dans la console 13 et une position déployée dans laquelle la tablette repas 26 se situe à l'extérieur du logement pour permettre au passager d'y poser un plateau repas.

Le siège 12 est avantageusement pourvu d'une cinématique lui permettant d'être mobile entre une position "assise", dans laquelle le siège 12 est configuré pour définir une position assise d'un passager, et une position "allongée", dans laquelle le siège 12 est configuré pour définir une surface de couchage du passager, avantageusement sensiblement horizontale. Des positions intermédiaires de confort sont aussi proposées, telles que la position "relax" dans laquelle un dossier du siège 12 est fortement incliné.

Afin de permettre l'allongement du passager, la console 13 comporte un logement 27 vu par transparence sur la figure 1 dans lequel est disposé un ottoman 28. L'ottoman 28 comporte une face horizontale formant repose-pieds sur lequel un passager arrière pourra poser ses pieds lorsque le siège 12 se trouve en position "allongée".

Le siège 12 comporte un axe d'extension X1 défini par l'intersection entre un plan horizontal et un plan médian vertical du siège 12 correspondant à un plan de symétrie du siège 12. L'axe d'extension X1 du siège 12 pourra former un angle non nul par rapport à une direction parallèle ou confondu avec un axe central de l'avion. En l'occurrence, le siège 12 est tourné en direction de l'axe. En variante, le siège 12 pourra être tourné dans une direction opposée à l'axe X2.

Par ailleurs, un panneau atténuateur de bruit 30 pourra être fixé sur une face de la coque d'intimité 14. Le panneau atténuateur de bruit 30 pourra être fixé sur une face avant de la coque d'intimité 14 située du côté du siège 12. En variante ou en complément, le panneau atténuateur de bruit 30 pourra être fixé sur la face arrière de la coque d'intimité 14. Le panneau atténuateur de bruit 30 pourra également être fixé sur une face latérale de la console 13 située du côté du siège 12 ou sur une face de l'ottoman 28. Ainsi, le panneau atténuateur de bruit 30 pourra être fixé sur un ou plusieurs éléments d'environnement du siège, notamment choisis parmi : la coque d'intimité 14, la console 13, ou l'ottoman 28.

Suivant un mode de réalisation particulier, des panneaux 30 atténuateurs de bruit sont prévus sur les faces des différents éléments d'environnement 13, 14, 18 entourant le passager lorsque le siège 12 se trouve en position allongée. Cela permet de créer un espace silencieux autour du passager lorsqu'il dort pour améliorer son confort. Toutefois, dans d'autres modes de réalisation, un panneau atténuateur de bruit 30 pourra être disposé uniquement sur la face d'un seul des éléments d'environnement du siège 12.

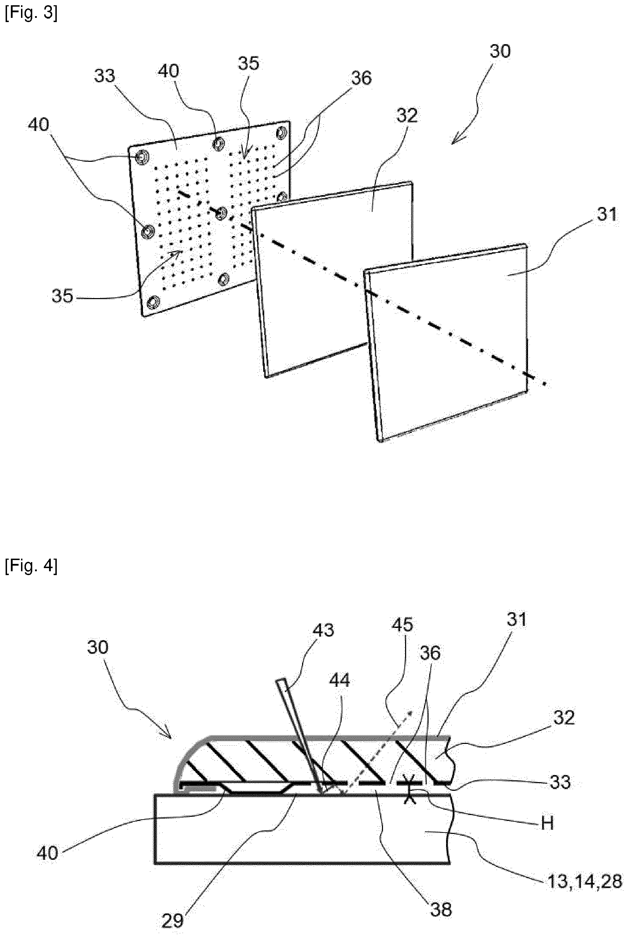

Comme on peut le voir sur les figures 2 et 3, ce panneau atténuateur de bruit 30 comporte une coiffe d'habillage 31, une couche de matériau absorbeur de son 32, et une plaque de support 33. La plaque de support 33 comporte au moins une portion perméable au son 35 munie d'au moins un trou traversant 36. De préférence, la portion perméable au son 35 est munie d'une pluralité de trous traversants 36 (dits également perforations 36). La plaque de support 33 est disposée de telle façon qu'il existe un espace vide 38 entre la portion perméable au son 35 et la face 29 de l'élément d'environnement du siège sur laquelle est fixé le panneau 30.

Comme cela est expliqué plus en détails ci-après, on forme ainsi un piège à son dans lequel les trous traversants 36 permettent le passage des ondes sonores à l'intérieur de l'espace vide 38 séparant la plaque de support 33 par rapport à la face 29 de l'élément d'environnement du siège 12. Après de multiples réflexions entre la face 29 de l'élément d'environnement et la couche de matériau absorbeur de son 32, l'intensité de bruit perçue par le passager au niveau du siège 12 est grandement réduite.

Plus précisément, la coiffe d'habillage 31 est réalisée dans un matériau perméable au son. Le matériau de la coiffe d'habillage 31 est également choisi pour conférer une finition esthétique à l'ensemble. La coiffe d'habillage 31 pourra par exemple être réalisée dans un matériau de type textile, cuir, similicuir, alcantara ou tout autre matériau flexible adapté à l'application. Le matériau utilisé pourra comporter une multitude de perforations pour faciliter le passage du son à travers la coiffe d'habillage 31.

La coiffe d'habillage 31 pourra présenter des motifs décoratifs sur ses parties visibles lorsque le panneau 30 est mis en place sur l'élément d'environnement du siège 12. Ces motifs décoratifs pourront être personnalisés en fonction de la compagnie aérienne.

La couche de matériau absorbeur de son 32 est disposée entre la coiffe d'habillage 31 et la plaque de support 33. La couche de matériau absorbeur de son 32 est réalisée dans un matériau choisi notamment parmi: un matériau fibreux, un matériau non tissé, un matériau à base de ouate, ou un matériau à base de mousse ou tout autre matériau absorbeur de son adapté à l'application.

La plaque de support 33 est avantageusement réalisée dans un matériau plastique thermoformé. La plaque de support 33 présente une épaisseur faible, par exemple comprise entre 1mm et 3mm. Suivant un exemple de mise en œuvre, on utilise une plaque 33 réalisée dans un matériau thermoplastique. Cette plaque est chauffée puis mise en forme à l'aide d'une matrice. Une fois refroidie, la plaque conserve la forme imprimée par la matrice.

Les figures 2 et 3 ont été représentées pour une plaque de support 33 plane afin de faciliter la compréhension de l'invention, mais il est clair que la plaque de support 33 pourra présenter une forme courbe correspondant à celle de l'élément d'environnement du siège 12. En particulier, la matrice de thermoformage pourra imposer à la plaque de support 33 une courbure correspondant à celle de la coque d'intimité 14. Une telle configuration permet de maintenir sensiblement constant l'écart entre la plaque de support 33 et la face 29 de la coque d'intimité 14.

On pourra ensuite réaliser une étape d'usinage dite de "détourage" consistant à découper un bord de la pièce non utile à la finition. Il est possible de tirer profit de cette étape d'usinage pour réaliser les trous traversants 36 dans la plaque de support 33 afin d'obtenir la portion perméable au son 35. Alternativement, la plaque utilisée pour le thermoformage pourra avoir été trouée préalablement à l'étape de chauffe de la plaque. Dans tous les cas, les trous traversants 36 de la plaque de support 33 ne se prolongent pas dans la couche de matériau absorbeur de son 32.

En variante, la plaque de support 33 est constituée par une pièce plastique injectée. Dans ce cas, les trous traversants 36 pourront être obtenus directement lors de l'injection de la pièce.

La plaque de support 33 comporte des pieds 40 en appui contre la face 29 de l'élément d'environnement 13, 14, 28 de façon à créer l'espace vide 38 entre la portion perméable au son 35 et l'élément d'environnement. Les pieds 40 pourront être constitués par des mises en forme locales de la plaque de support 33. La plaque de support 33 comporte ainsi des portions en saillie formant des pieds 40 venant de matière avec le reste de la plaque de support 33.

Afin d'assurer l'assemblage du panneau atténuateur de bruit 30, la coiffe d'habillage 31 recouvre la couche de matériau absorbeur de son 32 disposée contre la plaque de support 33, tel que cela est montré sur la figure 2. La coiffe d'habillage 31 est munie d'un rabat 41 fixé contre un bord de la plaque de support 33. La fixation du rabat 41 de la coiffe d'habillage 31 sur le panneau 30 pourra être effectuée par collage, par insertion dans une gorge de retenue, ou toute autre technique de fixation adaptée avec ou sans collage.

Par ailleurs, la plaque de support 33 comporte des moyens de fixation 42 amovibles pour fixer le panneau atténuateur de bruit 30 sur la face 29 de l'élément d'environnement 13, 14, 28 du siège 12. Le choix des moyens de fixation 42 dépend notamment des contraintes d'intégration du panneau 30 et de son positionnement dans l'unité de siège 10. Dans le cas où le panneau 30 est disposé dans une zone visible de l'unité de siège 10, on utilise de préférence des moyens de fixation 42 discrets démontables sans l'aide d'outil, comme par exemple des dispositifs d'encliquetage, des attaches dites "Velcro" (marque déposée) formées par des boucles et des crochets complémentaires, des attaches magnétiques, ou tout autre dispositif de fixation adapté à l'application.

Etant donné que les attaches velcro ou les attaches magnétiques présentent une épaisseur de l'ordre de quelques millimètres, il est possible de supprimer la réalisation des pieds 40 dans la plaque de support 33. En effet, les attaches constituent alors des entretoises permettant de créer l'espace vide 38 entre le panneau 30 et la face 29 de l'élément d'environnement 13, 14, 28.

Dans le cas où le panneau 30 est disposé dans une zone non visible de l'unité de siège 10, notamment une zone technique située en partie basse de l'unité de siège 10, on pourra utiliser des vis pour fixer le panneau 30 sur l'élément d'environnement 13, 14, 28. Alternativement, il est également possible d'utiliser des pions sapins ou tout autre moyen de fixation adapté à l'application. Ce type de moyen de fixation permet de garantir la retenue du panneau 30 dans le cadre de tests de certification au cours desquels des décélérations importantes sont appliquées à l'unité de siège 10.

Comme cela est illustré par la figure 4, le panneau 30 constitue un piège à son basé sur le principe d'Helmholtz de réflexion du son à l'intérieur de la cavité 38 créée entre l'élément d'environnement 13, 14, 28 et la plaque de support 33.

En effet, une onde sonore 43 traverse la coiffe d'habillage 31 puis est atténuée par la couche de matériau absorbeur de son 32. Les trous traversants 36 permettent le passage de la partie atténuée de l'onde sonore à l'intérieur de l'espace vide 38 séparant la plaque de support 33 par rapport à la face 29 de l'élément d'environnement 13, 14, 28. Après de multiples réflexions 44 entre la face 29 de l'élément d'environnement 13, 14, 28 et la face de portions pleines de la plaque de support 33, l'intensité de l'onde sonore 45 sortant du panneau atténuateur de bruit 30 est très faible. Le bruit perçu par le passager au niveau du siège 12 est ainsi grandement réduit.

Avantageusement, le panneau atténuateur de bruit 30 est configuré de façon à présenter un pic d'atténuation sonore pour des fréquences comprises entre 20Hz et 20kHz, de préférence entre 600Hz et 4KHz. Afin d'obtenir le pic d'atténuation recherché, il est possible de modifier le diamètre des trous 36 de la plaque de support 33, la hauteur H de l'espace vide 38 entre la plaque de support 33 et l'élément d'environnement 13, 14, 28, ainsi que l'épaisseur de la couche de matériau absorbeur de son 32. La hauteur H est mesurée suivant une direction perpendiculaire à la face 29 de l'élément d'environnement 13, 14, 28.

La plaque de support 33 comporte au moins une perforation 36 ayant une plus grande dimension comprise entre 0.1mm et 15mm, notamment comprise entre 0.1mm et 5mm, et valant de préférence de l'ordre de 1mm. Par "de l'ordre" de, on entend une variation possible de plus ou moins 10% autour de la valeur indiquée. Pour une perforation 36 ayant une forme circulaire, la "plus grande dimension" de la perforation correspond au diamètre de la perforation 36. Si la plaque de support 33 présente plusieurs perforations circulaires 36, ces perforations circulaires 36 peuvent être toutes de mêmes diamètres ou de diamètres différents. De même, la forme des perforations 36 ne se limite pas à des formes circulaires mais à toutes formes géométriques possibles, telles que des formes rectangulaires, carrées, triangulaires, ovales, hexagonales, ou autres.

Un taux de perforation correspondant au ratio entre la somme des surfaces des perforations 36 divisée par la surface totale de la plaque de support 33 est compris entre 1 et 30% et vaut de préférence de l'ordre de 12%.

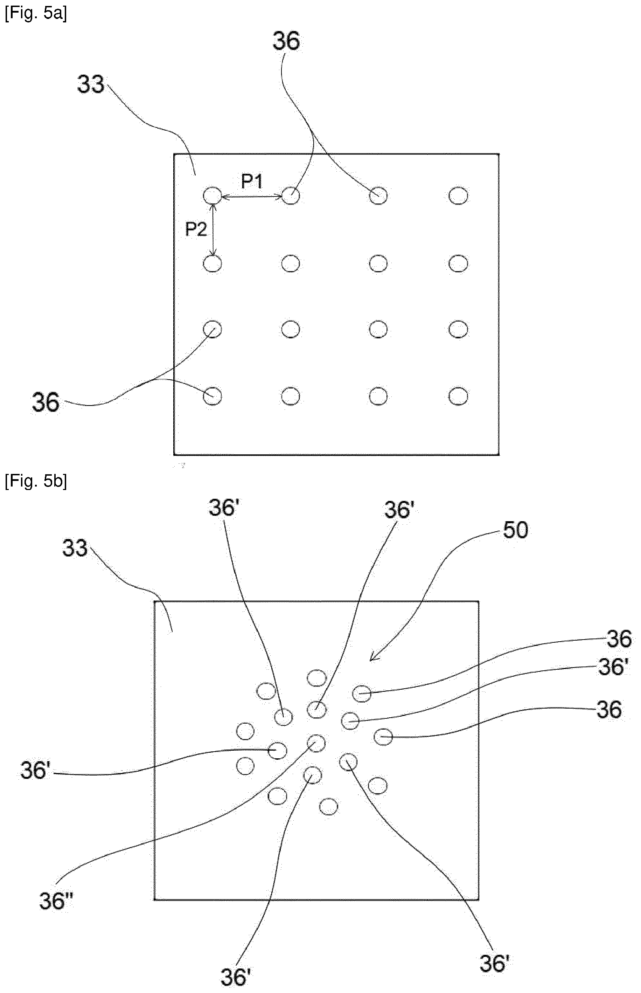

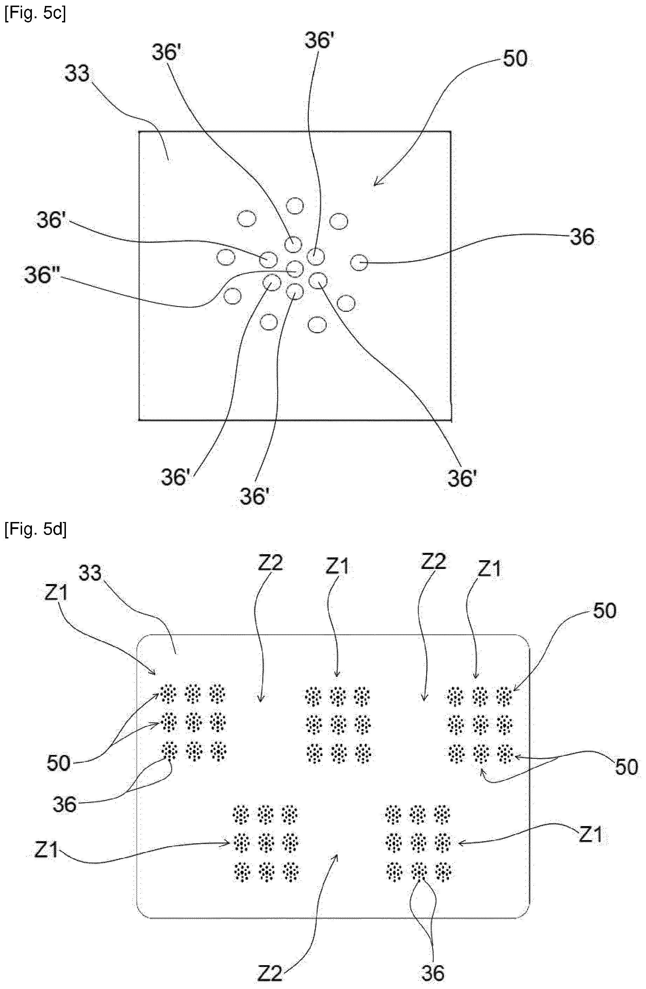

Les figures 5a, 5b, 5c, et 5d illustrent différents types de distributions des perforations 36 réalisées dans la plaque de support 33.

Dans le mode de réalisation de la figure 5a, les perforations 36 sont séparées entre elles par un pas régulier correspondant à une distance entre deux perforations successives. Les perforations 36 sont disposées suivant une pluralité de rangées horizontales et de colonnes verticales. On distingue un pas P1 entre deux perforations 36 adjacentes d'une même rangée et un pas P2 entre deux perforations 36 adjacentes d'une même colonne. Les pas P1 et P2 pourront être égaux ou différents.

Dans le mode de réalisation des figures 5b et 5c, les perforations 36 sont configurées suivant un motif 50 de forme circulaire. La disposition des perforations 36 à l'intérieur du motif 50 pourra varier de façon à adapter le panneau 30 à la gamme de fréquences à atténuer. Par exemple, les perforations intermédiaires 36' du mode de réalisation de la figure 5c sont plus proches d'une perforation centrale 36" que les perforations intermédiaires 36' du mode de réalisation de la figure 5b. Le motif 50 pourra comporter un nombre quelconque de rangées circulaires de perforations 36, 36'. En variante, les perforations 36, 36', 36" pourront être disposées suivant un motif 50 autre qu'un motif circulaire, notamment un motif triangulaire, rectangulaire, carré, ovale, ou tout autre forme de motif 50 adaptée à l'application.

Dans le mode de réalisation de la figure 5d, on prévoit une alternance de zones de perforations Z1 et de zones dépourvues de perforation Z2. Chaque zone de perforations Z1 comporte une pluralité de motifs 50 de perforations. Chaque motif de perforations 50 comporte une pluralité de perforations 36 disposées suivant un motif ayant une forme particulière, en l'occurrence une forme circulaire. En variante, comme indiqué précédemment, les motifs de perforations 50 pourront présenter une forme autre que circulaire, telle qu'une forme rectangulaire, carré, ovale, ou autre. Les motifs de perforations 50 sont espacés entre eux à l'intérieur d'une zone de perforations Z1. Un écart entre deux motifs 50 d'une même zone de perforations Z1 est inférieur à un écart entre deux motifs 50 de deux zones de perforations Z1 adjacentes du fait de leur séparation par une zone dépourvue de perforation Z2. Une telle configuration permet de cibler certaines fréquences à atténuer.

La hauteur H de l'espace vide 38 mesurée entre la portion perméable au son 35 et l'élément d'environnement 13, 14, 28 est comprise entre 1mm et 15mm et vaut de préférence 3mm. Une épaisseur de la couche de matériau absorbeur de son 32 pourra être comprise entre 1mm et 50mm et vaut de préférence 6mm.

Bien que le mode de réalisation des figures 2 à 4 mette en œuvre une couche de matériau absorbeur de son 32, la présence de cette couche de matériau absorbeur de son 32 n'est pas indispensable à la réalisation de l'invention et peut donc être omise. Le panneau atténuateur de bruit 30 comporte alors uniquement une coiffe d'habillage 31 et la plaque de support munie d'au moins une portion perméable au son 35.

Dans ce cas, les ondes sonores pénétrant au travers de la coiffe d'habillage 31 pénètrent au travers de la portion perméable au son 35 de la plaque de support 33 via le ou les trous traversants 36. Les ondes sonores sont alors atténuées du fait des multiples réflexions à l'intérieur de l'espace vide 38 séparant la plaque de support 33 par rapport à l'élément d'environnement 13, 14, 28. La présence de la couche de matériau absorbeur de son 32 permet de renforcer l'efficacité du dispositif en atténuant les ondes sonores au travers de cette couche 32.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que revendiquée.

## Revendications

1. Unité de siège (10) comportant:
- un siège (12),
- au moins un élément d'environnement (13, 14, 28) associé au siège (12), et
- un panneau atténuateur de bruit (30) fixé sur une face (29) de l'élément d'environnement (13, 14, 28), ledit panneau atténuateur de bruit (30) comportant une coiffe d'habillage (31),
**caractérisée en ce que** ledit panneau atténuateur de bruit (30) comporte en outre une plaque de support (33) comportant au moins une portion perméable au son (35) munie d'au moins un trou traversant (36), ladite plaque de support (33) étant disposée de telle façon qu'il existe un espace vide (38) entre ladite portion perméable au son (35) et la face (29) de l'élément d'environnement (13, 14, 28) du siège (12).

2. Unité de siège selon la revendication 1, **caractérisée en ce que** le panneau atténuateur de bruit (30) comporte en outre une couche de matériau absorbeur de son (32) disposée entre la coiffe d'habillage (31) et la plaque de support (33).

3. Unité de siège selon la revendication 2, **caractérisée en ce que** la couche de matériau absorbeur de son (32) est réalisée dans un matériau choisi notamment parmi: un matériau fibreux, un matériau non tissé, un matériau à base de ouate, ou un matériau à base de mousse.

4. Unité de siège selon l'une quelconque des revendications 1 à 3, **caractérisée en ce que** le panneau atténuateur de bruit (30) est configuré de façon à présenter un pic d'absorption sonore pour des fréquences comprises entre 20Hz et 20kHz, de préférence entre 600Hz et 4kHz.

5. Unité de siège selon l'une quelconque des revendications 1 à 4, **caractérisée en ce qu'**une hauteur (H) de l'espace vide (38) entre la plaque de support (33) et la face (29) de l'élément d'environnement (13, 14, 28) est comprise entre 1mm et 15mm et vaut de préférence 3mm.

6. Unité de siège selon l'une quelconque des revendications 1 à 5, **caractérisée en ce que** la plaque de support (33) comporte au moins un trou traversant (36) ayant un diamètre compris entre 1mm et 15mm.

7. Unité de siège selon l'une quelconque des revendications 1 à 6, **caractérisée en ce que** la plaque de support (33) comporte des pieds (40) en appui contre la face (29) de l'élément d'environnement (13, 14, 28) du siège (12).

8. Unité de siège selon l'une quelconque des revendications 1 à 7, **caractérisée en ce que** la plaque de support (33) comporte des moyens de fixation (42) amovibles pour fixer le panneau atténuateur de bruit (30) sur la face (29) de l'élément d'environnement (13, 14, 28) du siège (12).

9. Unité de siège selon l'une quelconque des revendications 1 à 8, **caractérisée en ce que** la coiffe d'habillage (31) est réalisée dans un matériau perméable au son.

10. Unité de siège selon l'une quelconque des revendications 1 à 9, **caractérisée en ce que** l'élément d'environnement associé au siège (12) est choisi parmi: une coque d'intimité (14) s'étendant au moins en partie autour du siège (12), une console (13), ou un ottoman (28).

## Patentansprüche

1. Sitzeinheit (10) umfassend:
- einen Sitz (12),
- mindestens ein dem Sitz (12) zugeordnetes Umgebungselement (13, 14, 28), und
- eine an einer Fläche (29) des Umgebungselements (13, 14, 28) befestigte Geräuschdämpfungsplatte (30), wobei die Geräuschdämpfungsplatte (30) eine Abdeckkappe (31) aufweist,
**dadurch gekennzeichnet, dass** die Geräuschdämpfungsplatte (30) außerdem eine Stützplatte (33) umfasst, die mindestens einen schalldurchlässigen Abschnitt (35) umfasst, der mit mindestens einem Durchgangsloch (36) versehen ist, wobei die Stützplatte (33) so angeordnet ist, dass zwischen dem schalldurchlässigen Abschnitt (35) und der Fläche (29) des Umgebungselements (13, 14, 28) des Sitzes (12) ein Freiraum (38) vorhanden ist.

2. Sitzeinheit nach Anspruch 1, **dadurch gekennzeichnet, dass** die Geräuschdämpfungsplatte (30) außerdem eine Schicht aus schallabsorbierendem Material (32) umfasst, die zwischen der Abdeckkappe (31) und der Stützplatte (33) angeordnet ist.

3. Sitzeinheit nach Anspruch 2, **dadurch gekennzeichnet, dass** die Schicht aus schallabsorbierendem Material (32) aus einem Material besteht, das insbesondere ausgewählt ist aus: einem Fasermaterial, einem Vliesmaterial, einem wattebasischen Material oder einem schaumstoffbasischen Material.

4. Sitzeinheit nach einem der Ansprüche 1 bis 3, **dadurch gekennzeichnet, dass** die Schalldämpfungsplatte (30) so ausgebildet ist, dass sie einen Schallabsorptionspeak für Frequenzen zwischen 20Hz und 20kHz, vorzugsweise zwischen 600Hz und 4kHz aufweist.

5. Sitzeinheit nach einem der Ansprüche 1 bis 4, **dadurch gekennzeichnet, dass** eine Höhe (H) des Freiraums (38) zwischen der Stützplatte (33) und der Fläche (29) des Umgebungselements (13, 14, 28) zwischen 1mm und 15mm, vorzugsweise 3mm, beträgt.

6. Sitzeinheit nach einem der Ansprüche 1 bis 5, **dadurch gekennzeichnet, dass** die Stützplatte (33) mindestens ein Durchgangsloch (36) mit einem Durchmesser zwischen 1mm und 15mm aufweist.

7. Sitzeinheit nach einem der Ansprüche 1 bis 6, **dadurch gekennzeichnet, dass** die Stützplatte (33) Füße (40) aufweist, die an der Fläche (29) des Umgebungselements (13, 14, 28) des Sitzes (12) anliegen.

8. Sitzeinheit nach einem der Ansprüche 1 bis 7, **dadurch gekennzeichnet, dass** die Stützplatte (33) abnehmbare Befestigungsmittel (42) zum Befestigen der Geräuschdämpfungsplatte (30) an der Fläche (29) des Umgebungselements (13, 14, 28) des Sitzes (12) umfasst.

9. Sitzeinheit nach einem der Ansprüche 1 bis 8, **dadurch gekennzeichnet, dass** die Abdeckkappe (31) aus einem schalldurchlässigen Material besteht.

10. Sitzeinheit nach einem der Ansprüche 1 bis 9, **dadurch gekennzeichnet, dass** das dem Sitz (12) zugeordnete Umgebungselement ausgewählt ist aus: einer Sichtschutzschale (14), die sich zumindest teilweise um den Sitz (12) erstreckt, einer Konsole (13) oder einer Ottomane (28).

## Claims

1. A seat unit (10) comprising:
- a seat (12),
- at least one environmental element (13, 14, 28) associated with the seat (12), and
- a noise attenuating panel (30) fixed to a face (29) of the environmental element (13, 14, 28), said noise attenuating panel (30) comprising a covering layer (31),
**characterized in that** said noise attenuating panel (30) further comprises a support plate (33) comprising at least one sound-permeable portion (35) provided with at least one through-hole (36), said support plate (33) being arranged such that an empty space (38) is provided between said sound-permeable portion (35) and the face (29) of the environmental element (13, 14, 28) of the seat (12).

2. The seat unit according to claim 1, **characterized in that** the noise attenuating panel (30) further comprises a layer of sound-absorbing material (32) arranged between the covering layer (31) and the support plate (33).

3. The seat unit according to claim 2, **characterized in that** the layer of sound-absorbing material (32) is made of a material chosen in particular from: a fibrous material, a non-woven material, a wadding-based material, or a foam-based material.

4. The seat unit according to any of the claims 1 to 3, **characterized in that** the noise attenuating panel (30) is configured so as to have a sound absorption peak for frequencies between 20Hz and 20kHz, preferably between 600Hz and 4kHz.

5. The seat unit according to any of the claims 1 to 4, **characterized in that** a height (H) of the empty space (38) between the support plate (33) and the face (29) of the surrounding element (13, 14, 28) is between 1mm and 15mm and is preferably of 3mm.

6. The seat unit according to any of the claims 1 to 5, **characterized in that** the support plate (33) comprises at least one through hole (36) with a diameter between 1mm and 15mm.

7. The seat unit according to any of the claims 1 to 6, **characterized in that** the support plate (33) comprises legs (40) bearing against the face (29) of the surrounding element (13, 14, 28) of the seat (12).

8. The seat unit according to any of the claims 1 to 7, **characterized in that** the support plate (33) comprises removable fixing means (42) for fixing the noise attenuating panel (30) to the face (29) of the environmental element (13, 14, 28) of the seat (12).

9. The seat unit according to any of the claims 1 to 8, **characterized in that** the covering layer (31) is made of a sound-permeable material.

10. The seat unit according to any of the claims 1 to 9, **characterized in that** the environmental element associated with the seat (12) is chosen from: a privacy shell (14) extending at least partly around the seat (12), a console (13), or an ottoman (28).
